# EUROPEAN PATENT APPLICATION

(11) **EP 3 534 316 A1**
(43) Date of publication of application: **04.09.2019**
(21) Application number: 17847715.4
(22) Date of filing: 29.08.2017
(51) Int. Cl.: G06Q 30/02, A47B 61/00

(54) **CLOTHES POSITIONING DEVICE AND METHOD**

(30) Priority: 28.10.2016 CN 201610968508
(71) Applicant: BOE Technology Group Co., Ltd., Beijing 100015 (CN)
(72) Inventor: ZHANG, Yuxin, Beijing 100176 (CN); WEI, Wei, Beijing 100176 (CN); QIAO, Yong, Beijing 100176 (CN)
(74) Representative: AWA Sweden AB
(86) International application number: PCT/CN2017/099478
(87) International publication number: WO 2018/076923

(57) **Abstract**

The present application belongs to the technical field of smart home, and specifically relates to a clothes positioning device. The clothes positioning device includes a body, a storage unit, a matching unit, a display unit and a positioning unit. The storage unit stores a clothes parameter and a placement position of the clothes placed inside the body, and figure data of a predetermined wearer; the matching unit is connected to the storage unit and determines, according to the figure data of a current wearer acquired from the storage unit and the clothes parameter stored in the storage unit, clothes matching the figure data of current wearer among the clothes in the body as recommended clothes; the positioning unit is connected to the storage unit and determines a position of the clothes selected by the wearer; and the display unit is connected to the matching unit, and synthesizes dressing effect image according to clothes parameter of recommended clothes and the figure data of current wearer and displays dressing effect image.

## Description

### CROSS-REFERENCE TO RELATED APPLICATION

This application claims the benefit of priority to China Patent Application No. 201610968508.X filed on October 28, 2016, the contents of which are incorporated herein in their entirety by reference.

### TECHNICAL FIELD

The present disclosure belongs to the technical field of smart home, and particularly relates to a clothes positioning device.

### BACKGROUND

At present, in people's daily life, smart home has become the trend. However, a current clothes positioning device usually only has a clothes positioning device body, and numerous clothes can only be stacked or hung inside. When people need a piece of clothing, they often forget about the specific storage location, which greatly increases the time to find clothes. Although a clothes positioning device with electric lifting rod emerges currently, this design only solves the problem of clothes storage space to some extent, but fails to alleviate the difficulty in looking for clothes. Moreover, even if one finally finds out a piece of clothing, the piece of clothing may not fit because of his/she recent changes in body shape, or he/she has to look for another piece of clothing that is more suitable due to unexpected dressing effect for the found piece of clothing. When looking for clothes, one often needs to try on clothes one by one, which not only wastes a lot of time, but also does not necessarily achieve timely results.

Therefore, it becomes a technical problem currently on the agenda how to make the clothes positioning device to be intelligent in order to bring convenience to people's lives.

### SUMMARY

In view of the above disadvantages existing in the related art, embodiments of the present disclosure provide a clothes positioning device, which can at least partially solve the problem that it takes a long time for a wearer to try on clothes and it is difficult for the wearer to search for clothes.

The clothes positioning device provided in the embodiments of the present disclosure includes a body for placing clothes, a storage unit, a matching unit, a display unit and a positioning unit, wherein:
the storage unit is configured to store a clothes parameter regarding the clothes placed inside the body, and figure data of predetermined wearers;
the matching unit is connected to the storage unit and configured to determine, according to the figure data of a current wearer and the clothes parameter stored in the storage unit, clothes that match the figure data of the current wearer among the clothes in the body, as recommended clothes;
the positioning unit is connected to the storage unit and configured to determine and indicate a position of selected clothes in the body; and
the display unit is connected to the matching unit and configured to synthesize a dressing effect image according to the clothes parameter of the recommended clothes and the figure data of the current wearer, and display the dressing effect image.

Optionally, the clothes positioning device further includes an acquisition unit connected to the matching unit and configured to acquire the figure data of the current wearer and transmit the acquired figure data to the matching unit.

Optionally, the matching unit acquires, from the storage unit, at least one piece of figure data of the predetermined wearer as the figure data of the current wearer.

Optionally, the acquisition unit is connected to the storage unit, and further configured to acquire the clothes parameter regarding the clothes placed inside the body and the figure data of the predetermined wearers, and transmit the acquired clothes parameter and figure data of the predetermined wearers to the storage unit.

Optionally, the acquisition unit includes at least one of:
a setting and searching assembly configured to set the clothes parameter or the figure data of the predetermined wearers and transmit the clothes parameter or the figure data of the predetermined wearers to the storage unit, and set the figure data of the current wearer and transmit the figure data of the current wearer to the matching unit; and query the clothes parameter from the storage unit and transmit the clothes parameter to the matching unit; and
an image acquisition assembly configured to acquire the clothes parameter regarding clothes to be placed inside the body and the figure data of the predetermined wearers and transmit the clothes parameter regarding the clothes to be placed inside the body and the figure data of the predetermined wearers to the storage unit, and acquire the figure data of the current wearer and transmit the figure data of the current wearer to the matching unit.

Optionally, the clothes positioning device further includes an identity recognition unit,
wherein the storage unit stores the figure data of the predetermined wearers in correspondence with identity information of the predetermined wearers; the acquisition unit is further configured to acquire the identity information of the current wearer;
the identity recognition module is configured to determine whether the current wearer is one of the predetermined wearers according to the identity information of the current wearer; in a case where the current wearer is determined to be one of the predetermined wearers, the acquisition unit is configured to query, from the storage unit, the figure data of a predetermined wearer having the same identity information as the current wearer among the predetermined wearers, and transmit the queried figure data to the matching unit as the figure data of the current wearer.

Optionally, the acquisition unit includes the setting and searching assembly, the setting and searching assembly includes a setting module and a searching module, the setting module is configured to receive the clothes parameter and identity information and figure data of a plurality of predetermined wearers, which are input by a user, and transmit the clothes parameter and the identity information and the figure data of the plurality of predetermined wearers to the storage unit, and further configured to receive the identity information of the current wearer; and the searching module is configured to query and read, from the storage unit, the clothes parameter and the figure data of a predetermined wearer having the same identity information as the current wearer among the plurality of predetermined wearers, and transmit the clothes parameter and the figure data to the matching unit.

Optionally, the acquisition unit includes an image acquisition assembly including an image acquisition module, and the image acquisition module is configured to acquire a clothes image of clothes to be placed inside the body and a figure image of a wearer, and obtain the clothes parameter and the figure data according to the clothes image and the figure image.

Optionally, the image acquisition assembly further includes an identity acquisition module, wherein:
the identity acquisition module includes a face acquisition module and/or a voice acquisition module, the face acquisition module is configured to acquire a face image of the wearer as the identity information, and the voice acquisition module is configured to acquire sound of the wearer as the identity information; and
the identity recognition module performs face recognition and/or voice recognition to determine whether the current wearer is one of the predetermined wearers.

Optionally, the acquisition module further includes an activation module configured to activate the image acquisition assembly to perform the acquisition.

Optionally, the activation module is an infrared sensor configured to recognize whether a wearer is present in front of the clothes positioning device.

Optionally, the clothes positioning device further includes an intelligent unit connected to the matching unit and including at least one of a weather forecasting module, a facial expression recognition module and an occasion mode setting module, wherein:
the weather forecasting module is configured to acquire weather condition, in a certain period of time, of a place at which the wearer is;
the facial expression recognition module is configured to recognize a current facial expression of the wearer; and
the occasion mode setting module is configured to set a dressing occasion by the wearer.

Optionally, the clothes parameter regarding the clothes inside the body includes size, color, style, and overall effect hologram.

Optionally, the clothes positioning device further includes an extended clothes selection unit connected to the matching unit, the extended clothes selection unit includes a network module, and the network module is capable of being connected to a network and acquiring network clothes resources, and configured to select, according to user's preference, the recommended clothes from the network clothes resources.

Optionally, the display unit includes a two-dimensional display screen and/or a holographic display screen, and the two-dimensional display screen and/or the holographic display screen are provided in front of the clothes positioning device.

Optionally, the two-dimensional display screen is a liquid crystal display screen or an organic light emitting diode display screen.

Optionally, the holographic display screen is a spatial light modulator.

Optionally, the clothes positioning device includes a voice acquisition module, and the display unit is further configured to switch between the two-dimensional display screen and the holographic display screen according to a voice instruction acquired by the voice acquisition module.

Embodiments of the present disclosure provide a method of locating clothes in a wardrobe, the wardrobe includes a body for placing clothes, and the method includes:
acquiring figure data of a current wearer and a clothes parameter;
determining, according to the figure data of the current wearer and the clothes parameter, clothes that match the figure data of the current wearer in the body, as recommended clothes;
synthesizing a dressing effect image according to the clothes parameter of the recommended clothes and the figure data of the current wearer, and displaying the dressing effect image; and
determining and indicating a position of clothes selected from the recommended clothes in the body.

Optionally, acquiring the figure data of the current wearer and the clothes parameter includes: acquiring, from a storage device for storing the figure data and the clothes parameter, figure data of a predetermined wearer as the figure data of the current wearer, and the clothes parameter.

The clothes positioning device and method according to the present disclosure achieve an intelligent wardrobe design, give a clothes steward function to the clothes positioning device, and bring great convenience to people's life. Through the clothes positioning device, the wearer only needs to stand in front of the clothes positioning device and does not need to try on clothes in person in order to preview dressing effect, and can quickly find the selected clothes according to the clothes position indicated on the display unit. In this way, disorder of the clothes positioning device is effectively avoided in search of clothes, efficiency is improved, a waste of time is avoided, and great convenience has been brought to people's life.

Further, the clothes recommended by the clothing positioning device not only fit well but also are more timely and decent, by means of intelligent units such as the weather forecasting module, the facial expression recognition module and the work/life mode setting module.

Further through the extended clothing selection unit, users are allowed to try on new clothes according to their own preferences.

### BRIEF DESCRIPTION OF THE DRAWINGS

FIG. 1 is a perspective view of a clothes positioning device in an embodiment of the present disclosure;
FIG. 2 is a functional block diagram of a clothes positioning device in an embodiment of the present disclosure;
FIG. 3 is a diagram illustrating a display principle of a holographic display screen in an embodiment of the present disclosure;
FIG. 4 is a diagram illustrating a working principle for using the clothes positioning device in FIG. 1 in an embodiment of the present disclosure;
FIG. 5 is a functional block diagram of a clothes positioning device in an embodiment of the present disclosure; and
FIGS. 6A and 6B are functional block diagrams of a clothes positioning device in embodiments of the present disclosure.

### DETAILED DESCRIPTION

To make those skilled in the art better understand technical solutions of the present disclosure, the present disclosure will be further described in detail below in conjunction with the accompanying drawings and the specific implementations.

Embodiments of the present disclosure provide a clothes positioning device, through which dressing effect can be viewed in advance, clothes can be quickly found according to the position of the clothes indicated on a display unit, the clothes positioning device is effectively avoided from being disordered in search of clothes, the efficiency is improved, and a waste of time is avoided.

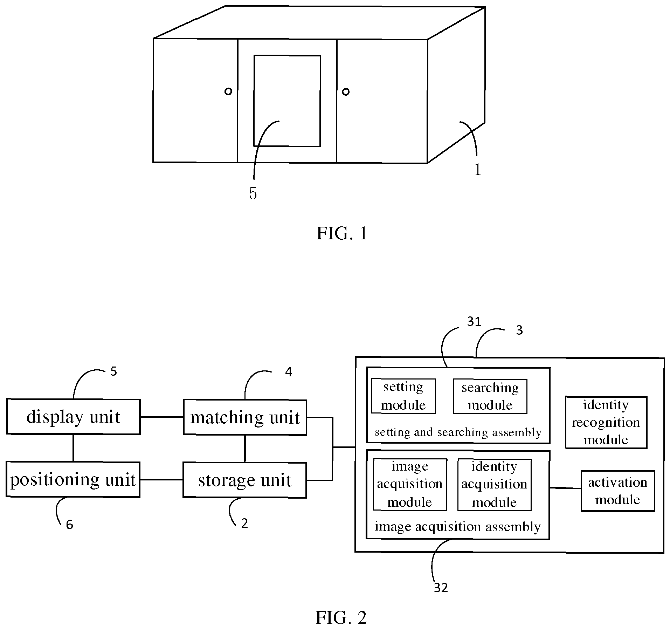

As shown in FIGS. 1 and 2, the clothes positioning device includes a body 1 for placing clothes, a storage unit 2, an acquisition unit 3, a matching unit 4, and a display unit 5.

The storage unit 2 is configured to store a clothes parameter regarding the clothes placed inside the body 1, and figure data of predetermined wearers.

The acquisition unit 3 is connected to the storage unit 2 and configured to acquire figure data of a current wearer and transmit the acquired figure data to the matching unit 4. The acquisition unit 3 includes at least one of a setting and searching assembly 31 and an image acquisition assembly 32.

The matching unit 4 is connected respectively to the storage unit 2 and the acquisition unit 3 and configured to determine, according to the figure data of the current wearer acquired by the acquisition unit 3 and the clothes parameter stored in the storage unit 2, clothes that match the figure data of the current wearer among the clothes in the body 1, as recommended clothes.

The display unit 5 is connected to the matching unit 4 and configured to synthesize a dressing effect image according to the clothes parameter of the recommended clothes and the figure data of the current wearer, and display the dressing effect image.

In an example, the clothes positioning device is implemented as an intelligent wardrobe.

In an example, in the matching unit 4, an existing computer program may be used for data synthesis to determine clothes matching the figure data of the current wearer as recommended clothes, and the dressing effect image may be synthesized in the display unit 5 according to an existing algorithm.

The clothes positioning device may further include a positioning unit 6 connected to the storage unit 2 and configured to determine and indicate a position of selected clothes in the body 1. For example, the display unit 5 may receive a selection of the recommended clothes and display the position of the selected clothes; the positioning unit 6 determines the position of the selected clothes in the body 1 and transmits information regarding the position to the display unit 5 for display.

With the clothes positioning device, the dressing effect can be viewed in advance before formal wear, and the clothes can be found quickly according to the position indicated by the display unit 5, thereby improving efficiency and avoiding a waste of time.

The display unit 5 may be provided in front of the clothes positioning device. The storage unit 2, the acquisition unit 3, the matching unit 4 and the positioning unit 6 may be provided at appropriate positions inside or outside the clothes positioning device according to actual application.

The acquisition unit 3 may be further configured to acquire the clothes parameter of the clothes placed inside the body 1 and the figure data of the predetermined wearers, and transmit the acquired clothes parameter and the figure data of the predetermined wearers to the storage unit 2.

In the acquisition unit 3, the setting and searching assembly 31 is configured to set the clothes parameter or the figure data of the predetermined wearers and transmit the clothes parameter or the figure data of the predetermined wearers to the storage unit 2 and set the figure data of the current wearer and transmit the figure data of the current wearer to the matching unit 4, and query the clothes parameter from the storage unit 2 and transmit the clothes parameter to the matching unit 4. The image acquisition assembly 32 is configured to acquire the clothes parameter regarding clothes to be placed inside the body 1 and the figure data of the predetermined wearers and transmit the clothes parameter and the figure data of the predetermined wearers to the storage unit 2, and acquire the figure data of the current wearer and transmit the figure data of the current wearer to the matching unit 4. That is, the acquisition unit 3 can set and pre-store the clothes parameter and the figure data, and obtain the clothes parameter and the figure data by searching the data in the storage unit 2; alternatively, the acquisition unit 3 can acquire images in real time and obtain the clothes parameter and the figure data through image processing. The two manners will be explained respectively below.

Regarding the manner that the figure data can be obtained by searching the data pre-stored in the storage unit 2, the setting and searching assembly 31 includes the setting module and the searching module. The setting module is configured to input, by a user, the clothes parameter and the figure data of a plurality of wearers, and transmit the clothes parameter and the figure data to the storage unit 2 to pre-store the clothes parameter, identities of the wearers and corresponding figure data. The searching module is configured to query and read, from the storage unit 2, the clothes parameter and the figure data corresponding to the wearer, and transmit the clothes information and the figure data to the matching unit. For example, the identity information of the current wearer may be acquired by the setting and searching assembly 31 or the image acquisition assembly 32, and the searching module queries and reads, from the storage unit 2, the figure data corresponding to the identity information of the current wearer according to the identity information.

Regarding the manner that images can be acquired in real time and the figure data are obtained through image processing, the image acquisition assembly 32 includes an image acquisition module configured to acquire a clothes image and a figure image of a wearer, and obtain, according to the clothes image and the figure image, the clothes parameter and the figure data, which can be stored in the storage unit 2 or transmitted to the matching unit 4. The image acquisition module may acquire figure information of family members and clothes holographic data, and transmit the data to the storage unit 2 for storage, or directly to the matching unit 4 for matching. For example, the image acquisition assembly 32 acquires the clothes parameter and the identity information and the figure data of the predetermined wearers and transmits them to the storage unit 2, and acquires the figure data of the current wearer and transmits it to the matching unit 4. Needless to say, the present disclosure is not limited thereto, and the image acquisition assembly 32 may directly transmit the acquired clothes parameter to the matching unit 4 for matching.

The clothes positioning device may further include an identity recognition unit. In this case, the acquisition unit 3 may acquire the identity information of the current wearer, the storage unit 2 may store the figure data of the predetermined wearers in correspondence with the identity information of the predetermined wearers. The identity recognition module may determine whether the current wearer is one of the predetermined wearers according to the identity information of the current wearer; if the current wearer is one of the predetermined wearers, the acquisition unit 3 queries, from the storage unit 2, the figure data of the current wearer according to the identity information of the current wearer, and transmits the queried figure data to the matching unit 4.

For example, in the setting and searching assembly 31, the setting module receives the clothes parameter and identity information and figure data of a plurality of predetermined wearers, which are input by the user and transmits the clothes parameter and the identity information and the figure data of the plurality of predetermined wearers to the storage unit 2; the searching module is configured to query and read, from the storage unit 2, the clothes parameter and the figure data corresponding to the identity information of the current wearer, and transmit the clothes parameter and the figure data to the matching unit.

Further, the image acquisition assembly 32 also includes an identity acquisition module. The identity acquisition module includes any one of a face acquisition module and a voice acquisition module, the face acquisition module is configured to acquire a face image of the wearer as the identity information, and the voice acquisition module is configured to acquire sound of the wearer as the identity information. The face acquisition module may be combined with the image acquisition module for acquiring figure into one (as shown in FIG. 2), to simplify the structure of the acquisition unit 3. In this case, the storage unit 2 pre-stores face data and sound data of the wearer, and the identity recognition module is configured to recognize the corresponding wearer according to the face image acquired by the face acquisition module, or recognize the corresponding wearer according to sound acquired by the voice acquisition module.

The smart clothes positioning device may be provided with only one of the setting and searching assembly 31 and the image acquisition assembly 32; alternatively, the smart clothes positioning device may be provided with both the setting and searching assembly 31 and the image acquisition assembly 32, and the way to obtain the figure data, based on which the recommended clothes is determined, may be selected by a user.

In order to improve the efficiency of positioning clothes by the clothes positioning device or reduce the amount of data processing of the clothes positioning device, optionally, in a case that the acquisition module 3 includes the image acquisition assembly 32, the acquisition module 3 further includes an activation module connected to the image acquisition assembly 32 and configured to activate the image acquisition module, the face acquisition module or the voice acquisition module to perform acquisition. By having the activation module, the image acquisition assembly including the image acquisition module, the face acquisition module or the voice acquisition module is activated only when it is detected that there is someone in front of the clothes positioning device, which can greatly reduce the idle data processing amount of image acquisition and sound acquisition and improve the processing rate of effective data.

Optionally, the activation module is an infrared sensor configured to recognize whether a wearer is present in front of the clothes positioning device. Needless to say, the infrared sensor is merely a specific example of the activation module. Depending on the application, the activation module may also be other sensor with a trigger function, which is not limited herein.

In order to obtain more complete and comprehensive clothes parameters, the clothes parameter of the clothes placed inside the body 1 includes size, color, style, and overall effect hologram, thus achieving a more three-dimensional and more accurate result for the best matching of dressing effect.

The positioning unit 6 may be configured such that a location number or a zoning location map of the clothes positioning device may be displayed in real time on the display unit 5 (i.e., a display screen) according to a placement position of the selected clothes in the body 1 of the clothes positioning device, or the positioning unit 6 may be implemented as an indicator provided on a frame of the clothes positioning device in a form of an LED lamp, which is not limited as long as the positioning unit 6 can provide the wearer with an eye-catching clothes location indication.

In the clothes positioning device according to an embodiment of the present disclosure, the display unit 5 is a 2D display screen and/or a holographic display screen, and the 2D display screen and/or the holographic display screen are provided in front of the clothes positioning device. By having the 2D display screen or the holographic display screen, all-dimensional and diversified dressing effect can be viewed. Optionally, the 2D display screen includes any one of a liquid crystal display screen and an organic light emitting diode display screen, and the holographic display screen optionally includes a spatial light modulator.

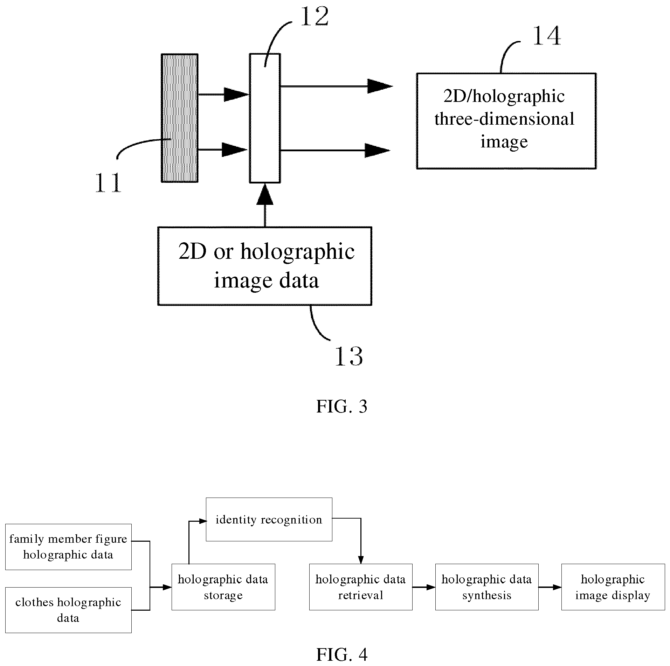

It should be understood that the clothes positioning device in the embodiment may be provided with both the 2D display screen and the holographic display screen, and selectively display a two dimensional (2D) image and a three dimensional (3D) holographic image as needed. Alternatively, the clothes positioning device may be provided with only the holographic display screen, for example, a liquid crystal spatial light modulator (LCD-SLM) may be chosen as the holographic display screen. When 2D data is transmitted to the liquid crystal spatial light modulator, the liquid crystal spatial light modulator displays a 2D image; when holographic data is transmitted to the liquid crystal spatial light modulator, the liquid crystal spatial light modulator displays a holographic 3D image. Detailed description will be given by taking the liquid crystal spatial light modulator 12 as an example. As shown in FIG. 3, the synthesized 2D or holographic image data 13 is provided to the liquid crystal spatial light modulator 12, a backlight module 11 serves as a coherent surface light source and irradiates coherent light on the liquid crystal spatial light modulator 12, and the liquid crystal spatial light modulator 12 modulates the coherent light, thereby displaying a 2D or holographic image 14.

In a friendly and interactive mode, when the voice acquisition module is included, the display unit 5 can make a switch between the 2D display screen and the holographic display screen according to an instruction issued by the wearer to the voice acquisition module. By switching between the 2D display screen and the holographic display screen, control is facilitated, and different dressing effect demonstrations are provided to the wearer.

As shown in FIG. 4, the clothes positioning device in an embodiment of the present disclosure may operate in the following manner: in a case that the user needs to select the clothes, once the user stands in front of the clothes positioning device, the infrared sensor as the activation unit first identifies the presence of the wearer, enables the image acquisition module/voice acquisition module to acquire an face image or sound information, and make a match with face images or sound information stored in the storage unit to perform identity recognition; holographic data regarding figure of a corresponding wearer (e.g., family member) and clothes holographic data stored in advance are queried and read according to the identity information determined by the above method or according to the identity information input by the wearer manually, and after the figure holographic data and the clothes holographic data are synthesized, the display unit 5 displays a dressing effect image and indicates the position of the clothes selected by the wearer in the clothes positioning device. Needless to say, the present disclosure is not limited thereto. The identity information may not be provided, and instead, figure data may be directly provided to perform clothes matching and synthesize the dressing effect image.

Embodiments of the present disclosure provide a holographic smart clothes positioning device, through which the wearer only needs to stand in front of the clothes positioning device and does not need to try on clothes in person in order to preview virtual dressing effect, and can quickly find the selected clothes according to the clothes position indicated on the display unit. In this way, disorder of the clothes positioning device is effectively avoided in search of clothes, efficiency is improved, a waste of time is avoided, an intelligent clothes positioning device is achieved, and great convenience has been brought to people's life.

Embodiments of the present disclosure provide a clothes positioning device, through which the dressing effect can be viewed in advance and the clothes can be quickly found according to the clothes position indicated on the display unit, thus effectively avoiding disorder of the clothes positioning device in search of clothes, improving the efficiency and avoiding a waste of time. In addition to the above components of the clothes positioning device, the clothes positioning device according to the embodiment of the present disclosure may further include an intelligent unit 7 which makes the clothes recommended by the clothing positioning device not only fit well but also more timely and decent.

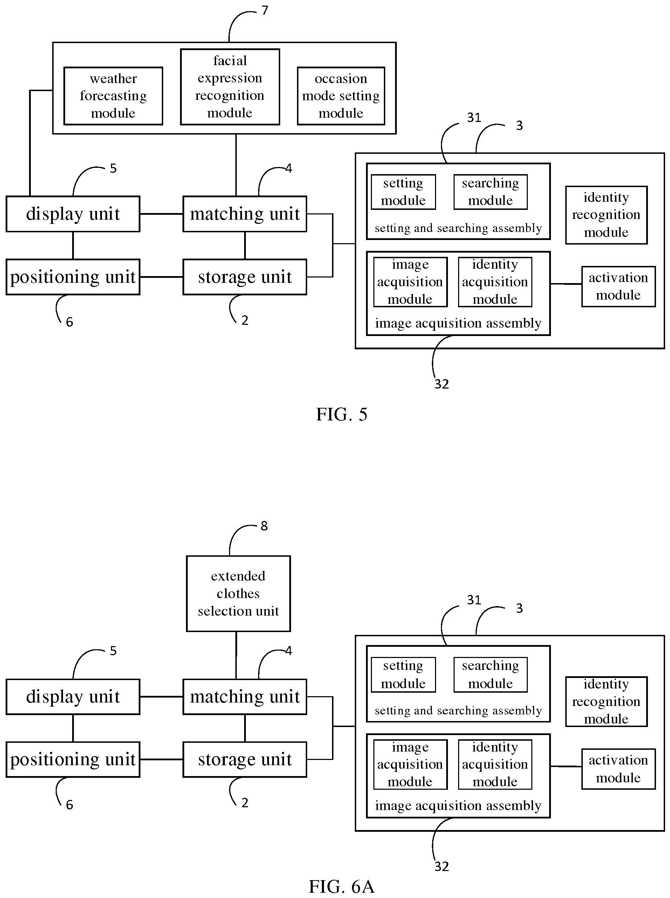

As shown in FIG. 5, the clothes positioning device according to the embodiment of the present disclosure may further include an intelligent unit 7 connected to the matching unit 4 and including at least one of a weather forecasting module, a facial expression recognition module and an occasion mode setting module.

The weather forecasting module is configured to acquire weather condition, in a certain period of time, of a place at which the wearer is.

The facial expression recognition module is configured to recognize a current facial expression of the wearer.

The occasion mode setting module is configured to set a dressing occasion by the wearer.

Herein, the occasion mode may be any one of various modes such as work, life, leisure, tourism, banquet, sports and the like. By having the intelligent module, timeliness of dressing can be greatly increased.

Supported by the intelligent unit 7, the matching unit 4 may retrieve clothes information of the corresponding wearer according to current weather condition, mood of the wearer, and preset work/life mode, automatically give a match scheme, and then display try-on effect of the wearer by the display unit 5. If a certain type of clothes is selected, the clothes can be found quickly according to the clothes position indicated by the display unit 5 or an LED indicator in the clothes positioning device, thus improving the efficiency and avoiding a waste of time.

The holographic smart clothes positioning device according to the embodiment of the present disclosure makes the clothes recommended by the clothing positioning device not only fit well but also more timely and decent, by means of intelligent units such as the weather forecasting module, the facial expression recognition module and the work/life mode setting module.

Embodiments of the present disclosure provide a clothes positioning device, through which the dressing effect can be viewed in advance and the clothes can be quickly found according to the clothes position indicated on the display unit, thus effectively avoiding disorder of the clothes positioning device in search of clothes, improving the efficiency and avoiding a waste of time. In addition to the above components of the clothes positioning device, the clothes positioning device according to the embodiment of the present disclosure may further include an extended clothes selection unit 8 connected to the matching unit 4 and allowing users to maintain the latest trendsetting experience for their favorite clothes type.

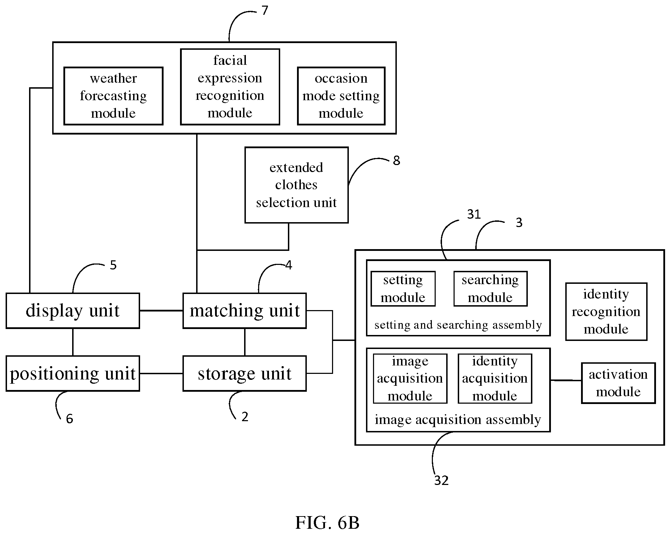

As shown in FIG. 6A or 6B, the clothes positioning device according to the embodiment of the present disclosure further includes an extended clothes selection unit 8 including a network module, and the network module can be connected to a network and acquire network clothes resources, and configured to select, according to user's preference, the recommended clothes from the network clothes resources. For example, the extended clothes selection unit 8 may automatically push new clothes according to an online shop of interest and a favorite type, and display the try-on effect of the wearer on the display unit 5. For example, the extended clothes selection unit 8 of the clothes positioning device may include a Wifi wireless network module, may automatically push new clothes according to an online shop of interest and a favorite type through Wifi function and network connection, and display a 2D dressing effect or a 3D dressing effect on a 2D or holographic display screen. By having the network recommendation function, automatic push of new clothes is achieved, and the trend of clothes is ensured.

The holographic smart clothes positioning device according to the embodiment of the present disclosure achieves intelligentization of the clothes positioning device, provides a clothes steward function to the clothes positioning device currently used for storing the clothes, and brings great convenience to people's life.

It should be understood that the clothes positioning device may be implemented as a wardrobe in a broad sense, which includes a cabinet made of wood, metal material or other material, and also includes a space for storing clothes in the form of a closed compartment or an open compartment.

Embodiments of the present disclosure provide a method of locating clothes in a wardrobe, the wardrobe includes a body for placing clothes, and the method includes:
acquiring figure data of a current wearer and a clothes parameter;
determining, according to the figure data of the current wearer and the clothes parameter, clothes that match the figure data of the current wearer in the body, as recommended clothes;
synthesizing a dressing effect image according to the clothes parameter of the recommended clothes and the figure data of the current wearer, and displaying the dressing effect image; and
determining and indicating a position of clothes selected from the recommended clothes in the body.

Optionally, the step of acquiring the figure data of the current wearer and the clothes parameter includes: acquiring, from a storage device for storing the figure data and the clothes parameter, figure data of a predetermined wearer as the figure data of the current wearer, and the clothes parameter.

It could be understood that the above embodiments are merely exemplary embodiments adopted for describing the principle of the present disclosure, but the present disclosure is not limited thereto. Various variations and improvements may be made by those of ordinary skill in the art without departing from the spirit and essence of the present disclosure, and these variations and improvements shall also be regarded as falling into the protection scope of the present disclosure.

## Claims

1. A clothes positioning device, comprising a body for placing clothes, a storage unit, a matching unit, a display unit and a positioning unit, wherein:
the storage unit is configured to store a clothes parameter regarding the clothes placed inside the body, and figure data of predetermined wearers;
the matching unit is connected to the storage unit and configured to determine, according to the figure data of a current wearer and the clothes parameter stored in the storage unit, clothes that match the figure data of the current wearer among the clothes in the body, as recommended clothes;
the positioning unit is connected to the storage unit and configured to determine and indicate a position of selected clothes in the body; and
the display unit is connected to the matching unit and configured to synthesize a dressing effect image according to the clothes parameter of the recommended clothes and the figure data of the current wearer, and display the dressing effect image.

2. The clothes positioning device of claim 1, further comprising an acquisition unit connected to the matching unit and configured to acquire the figure data of the current wearer and transmit the acquired figure data to the matching unit.

3. The clothes positioning device of claim 1, wherein the matching unit acquires, from the storage unit, at least one piece of figure data of the predetermined wearer as the figure data of the current wearer.

4. The clothes positioning device of claim 2, wherein the acquisition unit is connected to the storage unit, and further configured to acquire the clothes parameter regarding the clothes placed inside the body and the figure data of the predetermined wearers, and transmit the acquired clothes parameter and figure data of the predetermined wearers to the storage unit.

5. The clothes positioning device of claim 4, wherein the acquisition unit comprises at least one of:
a setting and searching assembly configured to set the clothes parameter or the figure data of the predetermined wearers and transmit the clothes parameter or the figure data of the predetermined wearers to the storage unit, and set the figure data of the current wearer and transmit the figure data of the current wearer to the matching unit; and query the clothes parameter from the storage unit and transmit the clothes parameter to the matching unit; and
an image acquisition assembly configured to acquire the clothes parameter regarding clothes to be placed inside the body and the figure data of the predetermined wearers and transmit the clothes parameter regarding the clothes to be placed inside the body and the figure data of the predetermined wearers to the storage unit, and acquire the figure data of the current wearer and transmit the figure data of the current wearer to the matching unit.

6. The clothes positioning device of claim 4, further comprising an identity recognition unit,
wherein the storage unit stores the figure data of the predetermined wearers in correspondence with identity information of the predetermined wearers; the acquisition unit is further configured to acquire the identity information of the current wearer;
the identity recognition module is configured to determine whether the current wearer is one of the predetermined wearers according to the identity information of the current wearer; in a case where the current wearer is determined to be one of the predetermined wearers, the acquisition unit is configured to query, from the storage unit, the figure data of a predetermined wearer having the same identity information as the current wearer among the predetermined wearers, and transmit the queried figure data to the matching unit as the figure data of the current wearer.

7. The clothes positioning device of claim 6, wherein the acquisition unit comprises the setting and searching assembly,
the setting and searching assembly comprises a setting module and a searching module,
the setting module is configured to receive the clothes parameter and identity information and figure data of a plurality of predetermined wearers, which are input by a user, and transmit the clothes parameter and the identity information and the figure data of the plurality of predetermined wearers to the storage unit, and further configured to receive the identity information of the current wearer; and
the searching module is configured to query and read, from the storage unit, the clothes parameter and the figure data of a predetermined wearer having the same identity information as the current wearer among the plurality of predetermined wearers, and transmit the clothes parameter and the figure data to the matching unit.

8. The clothes positioning device of claim 6, wherein the acquisition unit comprises an image acquisition assembly comprising an image acquisition module, and the image acquisition module is configured to acquire a clothes image of clothes to be placed inside the body and a figure image of a wearer, and obtain the clothes parameter and the figure data according to the clothes image and the figure image.

9. The clothes positioning device of claim 8, wherein the image acquisition assembly further comprises an identity acquisition module,
the identity acquisition module comprises a face acquisition module and/or a voice acquisition module, the face acquisition module is configured to acquire a face image of the wearer as the identity information, and the voice acquisition module is configured to acquire sound of the wearer as the identity information; and
the identity recognition module performs face recognition and/or voice recognition to determine whether the current wearer is one of the predetermined wearers.

10. The clothes positioning device of claim 9, wherein the acquisition module further comprises an activation module configured to activate the image acquisition assembly to perform the acquisition.

11. The clothes positioning device of claim 10, wherein the activation module is an infrared sensor configured to recognize whether a wearer is present in front of the clothes positioning device.

12. The clothes positioning device of any one of claims 1 to 11, further comprising an intelligent unit connected to the matching unit and comprising at least one of a weather forecasting module, a facial expression recognition module and an occasion mode setting module, wherein:
the weather forecasting module is configured to acquire weather condition, in a certain period of time, of a place at which the wearer is;
the facial expression recognition module is configured to recognize a current facial expression of the wearer; and
the occasion mode setting module is configured to set a dressing occasion by the wearer.

13. The clothes positioning device of any one of claims 1 to 12, wherein the clothes parameter regarding the clothes inside the body comprises size, color, style, and overall effect hologram.

14. The clothes positioning device of any one of claims 1 to 13, further comprising an extended clothes selection unit connected to the matching unit, the extended clothes selection unit comprises a network module, and the network module is capable of being connected to a network and acquiring network clothes resources, and configured to select, according to user's preference, the recommended clothes from the network clothes resources.

15. The clothes positioning device of any one of claims 1 to 14, wherein the display unit comprises a two-dimensional display screen and/or a holographic display screen, and the two-dimensional display screen and/or the holographic display screen are provided in front of the clothes positioning device.

16. The clothes positioning device of claim 15, wherein the display unit comprises the two-dimensional display screen, which is a liquid crystal display screen or an organic light emitting diode display screen.

17. The clothes positioning device of claim 15, wherein the display unit comprises the holographic display screen, which is a spatial light modulator.

18. The clothes positioning device of claim 15, wherein the display unit is the two-dimensional display screen and the holographic display screen, the clothes positioning device comprises a voice acquisition module, and the display unit is further configured to switch between the two-dimensional display screen and the holographic display screen according to a voice instruction acquired by the voice acquisition module.

19. A method of locating clothes in a wardrobe, the wardrobe comprising a body for placing clothes, the method comprising:
acquiring figure data of a current wearer and a clothes parameter;
determining, according to the figure data of the current wearer and the clothes parameter, clothes that match the figure data of the current wearer in the body, as recommended clothes;
synthesizing a dressing effect image according to the clothes parameter of the recommended clothes and the figure data of the current wearer, and displaying the dressing effect image; and
determining and indicating a position of clothes selected from the recommended clothes in the body.

20. The method of claim 19, wherein acquiring the figure data of the current wearer and the clothes parameter comprises:
acquiring, from a storage device for storing the figure data and the clothes parameter, figure data of a predetermined wearer as the figure data of the current wearer, and the clothes parameter.
